# EUROPÄISCHE PATENTSCHRIFT

(11) **EP 2 542 623 B1**
(45) Veröffentlichungstag und Bekanntmachung des Hinweises auf die Patenterteilung: **25.12.2013**
(21) Anmeldenummer: 11704628.4
(22) Anmeldetag: 24.02.2011
(51) Int. Cl.: C08L 81/02, C08L 81/06, C08L 71/10

(54) **VERBESSERTE BLENDS AUS POLYARYLENETHERN UND POLYARYLENSULFIDEN**
IMPROVED BLENDS OF POLYARYLENE ETHERS AND POLYARYLENE SULFIDES
MÉLANGES AMÉLIORÉS DE POLYARYLÈNE-ÉTHERS ET DE POLYARYLÈNESULFURES

(30) Priorität: 05.03.2010 EP 10155666
(43) Veröffentlichungstag der Anmeldung: 09.01.2013
(73) Patentinhaber: BASF SE, 67056 Ludwigshafen (DE)
(72) Erfinder: WEBER, Martin, 67487 Maikammer (DE); MALETZKO, Christian, 67122 Altrip (DE); ZEIHER, Susanne, 67071 Ludwigshafen (DE); VÖLKEL, Mark, 68526 Ladenburg (DE); GÜNTHERBERG, Norbert, 67346 Speyer (DE); BLUHM, Rüdiger, 67117 Limburgerhof (DE)
(86) Internationale Anmeldenummer: PCT/EP2011/052721
(87) Internationale Veröffentlichungsnummer: WO 2011/107389

(56) Entgegenhaltungen:
- EP-A1- 0 673 973
- EP-A1- 0 855 429
- EP-A2- 0 855 430
- EP-A2- 0 903 376

## Beschreibung

Die vorliegende Erfindung betrifft thermoplastische Formmassen enthaltend folgende Komponenten:
(A) mindestens ein Polyarylenether (A1) mit im Mittel höchstens 0,1 phenolischen Endgruppen pro Polymerkette und mindestens ein Polyarylenether (A2) mit im Mittel mindestens 1,5 phenolischen Endgruppen pro Polymerkette,
(B) mindestens ein Polyarylensulfid,
(C) mindestens ein funktionalisierter Polyarylenether umfassend Carboxylgruppen,
(D) mindestens ein faser- oder teilchenförmiger Füllstoff und
(E) optional weitere Zusatzstoffe und/oder Verarbeitungshilfsmittel.

Darüber hinaus betrifft die vorliegende Erfindung ein Verfahren zur Herstellung der erfindungsgemäßen thermoplastischen Formmassen, deren Verwendung zur Herstel-lung von Formteilen, Fasern, Schäumen oder Filmen und die so erhältlichen Formteile, Fasern, Schäume und Filme.

Polyarylenether gehören zur Gruppe der Hochleistungsthermoplaste und finden aufgrund ihrer hohen Wärmeform- und Chemikalienbeständigkeit Verwendung in hoch beanspruchten Anwendungen. Polyarylenether sind amorph und weisen daher oft eine unzureichende Beständigkeit gegenüber aggressiven Medien auf. Weiterhin weisen Polyarylenether auch eine hohe Schmelzeviskosität auf, was besonders die Verarbeitung zu großen Formteilen mittels Spritzguss beeinträchtigt. Die hohe Schmelzeviskosität ist insbesondere nachteilig bei der Herstellung von Formmassen mit hoher Füllstoff- oder Faserbeladung.

Mischungen aus den hochtemperaturbeständigen Polyarylenethern und Polyarylensulfiden sind an sich bekannt und weisen gegenüber den Einzelkomponenten z.B. verbesserte mechanische Eigenschaften und höhere Chemikalienbeständigkeit auf.

Aus der EP-A 673 973 sind Glasfaser-gefüllte Polymermischungen enthaltend Polyarylenether mit mindestens 0,03 Gew.-% OH-Endgruppen, Polyarylenether mit weniger als 0,03 Gew.-% OH-Endgruppen und Polyphenylensulfid bekannt. Die thermoplastischen Formmassen der EP-A 673 973 enthalten keine funktionalisierten Polyarylenether und weisen nicht für alle Anwendungen ausreichende mechanische Eigenschaften, insbesondere eine ausreichende Reißdehnung, Reißfestigkeit und Schlagzähigkeit auf. Insbesondere die Beständigkeit gegenüber Kraftstoffen ist verbesserungswürdig.

Aus der EP-A 855 428 sind kautschukhaltige Polyarylenether bekannt, welche Carboxylgruppen-haltige funktionalisierte Polyarylenether enthalten. Die thermoplastischen Formmassen der EP-A 855 428 enthalten keine OH-terminierten Polyarylenether und weisen nicht für alle Anwendungen ausreichende mechanische Eigenschaften, insbesondere eine ausreichende Reißfestigkeit und Schlagzähigkeit auf. Insbesondere die Beständigkeit gegenüber Kraftstoffen ist verbesserungswürdig.

Gegenstand der EP-A 903 376 sind thermoplastische Formmassen enthaltend Polyary-lenether, Polyarylensulfid und Kautschuk, welche ebenfalls zusätzlich funktionalisierte Polyarylenether enthalten. Die Polyarylenether der EP-A 903 376 weisen einen höchstens geringfügigen Anteil an OH-Endgruppen auf. Die in der EP-A 903 376 verwendeten funktionalisierten Polyarylenether sind hinsichtlich ihrer Eignung für verstärkte Formmassen oft unzureichend. Die Verwendung solcher Produkte führt in gefüllten, insbesondere faserverstärkten Formmassen oft zu unzureichenden mechanischen Eigenschaften, insbesondere zu einer unzureichenden Zähigkeit und Reißfestigkeit sowie zu einer unzureichenden Beständigkeit gegenüber Kraftstoffen, insbesondere FAM B.

Eine Strategie zur Verbesserung der Kraftstoffbeständigkeit von Blends aus Polyarylenethern und Polyarylensulfiden ist aus dem Stand der Technik somit nicht bekannt.

Die Aufgabe der vorliegenden Erfindung bestand demzufolge darin, thermoplastische Formmassen auf Basis von Polyarylenethern bereitzustellen, welche die vorgenannten Nachteile nicht oder in geringerem Umfang aufweisen. Insbesondere sollten die thermoplastischen Formmassen eine hohe Beständigkeit gegenüber Kraftstoffen, insbesondere FAM B aufweisen. Gleichzeitig sollten die thermoplastischen Formmassen gute mechanischen Eigenschaften, insbesondere eine hohe Schlagzähigkeit, eine hohe Reißdehnung und eine hohe Reißfestigkeit aufweisen.

Die vorgenannten Aufgaben werden gelöst durch die erfindungsgemäßen thermoplastischen Formmassen. Bevorzugte Ausführungsformen sind den Ansprüchen und der nachfolgenden Beschreibung zu entnehmen. Kombinationen bevorzugter Ausführungsformen verlassen den Rahmen der vorliegenden Erfindung nicht.

Die erfindungsgemäßen thermoplastischen Formmassen enthalten folgende Komponenten:
(A) mindestens ein Polyarylenether (A1) mit im Mittel höchstens 0,1 phenolischen Endgruppen pro Polymerkette und mindestens ein Polyarylenether (A2) mit im Mittel mindestens 1,5 phenolischen Endgruppen pro Polymerkette,
(B) mindestens ein Polyarylensulfid,
(C) mindestens ein funktionalisierter Polyarylenether umfassend Carboxylgruppen,
(D) mindestens ein faser- oder teilchenförmiger Füllstoff und
(E) optional weitere Zusatzstoffe und/oder Verarbeitungshilfsmittel.

Die erfindungsgemäßen thermoplastischen Formmassen enthalten dabei bevorzugt von 20 bis 88,5 Gew.-% der Komponente (A1), von 0,5 bis 10 Gew.-% der Komponente (A2), von 5 bis 65 Gew.-% der Komponente (B), von 1 bis 15 Gew.-% der Komponente (C), von 5 bis 70 Gew.-% der Komponente (D) und von 0 bis 40 Gew.-% der Komponente (E), wobei die Summe der Gew.-% der Komponenten (A) bis (E) bezogen auf die Gesamtmenge der Komponenten (A) bis (E) 100 Gew.-% ergibt.

Die erfindungsgemäßen thermoplastischen Formmassen enthalten besonders bevorzugt von 20 bis 73 Gew.-% der Komponente (A1), von 1 bis 10 Gew.-% der Komponente (A2), von 10 bis 30 Gew.-% der Komponente (B), von 1 bis 15 Gew.-% der Komponente (C), von 15 bis 60 Gew.-% der Komponente (D) und von 0 bis 30 Gew.-% der Komponente (E), wobei die Summe der Gew.-% der Komponenten (A) bis (E) bezogen auf die Gesamtmenge der Komponenten (A) bis (E) 100 Gew.-% ergibt.

Die einzelnen Komponenten werden im Folgenden näher erläutert.

### Komponente A

Erfindungsgemäß enthalten die thermoplastischen Formmassen mindestens ein Polyarylenether (A1) mit im Mittel höchstens 0,1 phenolischen Endgruppen pro Polymerkette und mindestens ein Polyarylenether (A2) mit im Mittel mindestens 1,5 phenolischen Endgruppen pro Polymerkette. Der Ausdruck "im Mittel" bedeutet dabei ein Zahlenmittel.

Es ist für den Fachmann offensichtlich, dass die phenolischen Endgruppen reaktiv sind und in den thermoplastischen Formmassen in mindestens teilweise umgesetzter Form vorliegen können. Die thermoplastischen Formmassen werden vorzugsweise durch Compoundierung, d. h. durch Vermischen der Komponenten in einem fließfähigen Zustand hergestellt. Entsprechend ist die Formulierung "thermoplastische Formmassen enthaltend folgende Komponenten" vorzugsweise gleichzusetzen mit "thermoplastische Formmassen erhältlich durch Compoundierung der folgenden Komponenten".

Unter phenolischer Endgruppe wird im Rahmen der vorliegenden Erfindung eine Hydroxygruppe verstanden, die an einen aromatischen Kern gebunden ist und die gegebenenfalls auch deprotoniert vorliegen kann. Es ist dem Fachmann bekannt, dass eine phenolische Endgruppe durch Abspaltung eines Protons infolge Einwirkung einer Base auch als sogenannte Phenolatendgruppe vorliegen kann. Der Begriff phenolische Endgruppen umfasst somit ausdrücklich sowohl aromatische OH- als auch Phenolatgruppen.

Die Bestimmung des Anteils der phenolischen Endgruppen erfolgt vorzugsweise durch potentiometrische Titration. Hierfür wird das Polymer in Dimethylformamid gelöst und mit einer Lösung von Tetrabutylammoniumhydroxid in Toluol/Methanol titriert. Die Endpunktserfassung erfolgt potentiometrisch. Die Bestimmung des Anteils an Halogenendgruppen erfolgt vorzugsweise mittels Atomspektroskopie.

Aus dem Gewichtsanteil phenolischer Endgruppen bezogen auf das Gesamtgewicht des Polymers (m^{OH}) und dem zahlenmittleren Molekulargewicht (Mₙ^{P}) kann der Fachmann nach bekannten Methoden die mittlere Zahl an phenolischen Endgruppen pro Polymerkette (n^{OH}) unter der Annahme strikt linearer Polymerketten nach folgender Formel ermitteln: n^{OH} = m^{OH} [in Gew.-%] /100 * Mₙ^{P} [in g/mol] * 1/17.

Alternativ kann die mittlere Zahl von phenolischen Endgruppen pro Polymerkette (n^{OH}) unter Voraussetzung strikt linearer Polymerketten bei gleichzeitiger Kenntnis des Gewichtsanteils an Cl-Endgruppen (m^{Cl}) unter der Annahme, dass ausschließlich OH- und Cl-Endgruppen vorliegen, wie folgt berechnet werden: n^{OH} = 2 / (1 + (17/35,45 * m^{Cl} / m^{OH})). Dem Fachmann ist bekannt, wie die Berechnungsweisen im Fall anderer Endgruppen als Cl anzupassen sind.

Ohne sich beschränken zu wollen besteht die Vorstellung, dass die Komponente (A2) infolge ihres hohen Gehaltes an reaktiven phenolischen Endgruppen als Verträglichkeitsvermittler für die Komponenten (A) bis (D) dient. Darüber hinaus besteht die Vorstellung, dass die Komponente (A1) mit ihrem hohen Gehalt an inerten Endgruppen das Eigenschaftsprofil der erfindungsgemäßen thermoplastischen Formmassen weiter verbessert, so dass die Anwesenheit von Polyarylenethern mit phenolischen Endgruppen einerseits und von Polyarylenethern mit inerten Endgruppen andererseits synergistisch in Bezug auf die Endeigenschaften der thermoplastischen Formmassen wirkt.

Die Herstellung von Polyarylenethern bei gleichzeitiger Steuerung der Endgruppen ist dem Fachmann bekannt und wird weiter unten näher beschrieben. Die bekannten Polyarylenether weisen üblicherweise Halogen-, insbesondere -F oder -Cl, oder phenolische OH- bzw. Phenolat-Endgruppen auf, wobei letztere als solche oder in umgesetzter Form, insbesondere in Form von -OCH₃-Endgruppen, vorliegen können.

Vorzugsweise weisen die Polyarylenether (A1) höchstens 0,01 Gew.-%, besonders bevorzugt höchstens 0,005 Gew.-% phenolische Endgruppen bezogen auf die Gewichtsmenge der Komponente (A1) auf. Vorzugsweise weisen die Polyarylenether (A2) mindestens 0,15 Gew.-%, insbesondere mindestens 0,18 Gew.-%, besonders bevorzugt mindestens 0,2 Gew.-% phenolische Endgruppen bezogen auf die Gewichtsmenge der Komponente (A2), jeweils berechnet als Gewichtsmenge OH, auf.

Die jeweilige Obergrenze für den Gehalt phenolischer Endgruppen in den Komponenten (A1) bzw. (A2) ergibt sich aus der Zahl der zur Verfügung stehenden Endgruppen pro Molekül (zwei im Fall linearer Polyarylenether) und der zahlenmittleren Kettenlänge. Entsprechende Berechnungen sind dem Fachmann bekannt.

Vorzugsweise beträgt die mittlere Anzahl der phenolischen Endgruppen der Komponente (A1) pro Polymerkette von 0 bis 0,1, insbesondere von 0 bis 0,08, besonders bevorzugt von 0 bis 0,05, ganz besonders bevorzugt von 0 bis 0,02, insbesondere bevorzugt höchstens 0,01.

Vorzugsweise beträgt die mittlere Anzahl der phenolischen Endgruppen der Komponente (A2) pro Polymerkette von 1,6 bis 2, insbesondere von 1,7 bis 2, besonders bevorzugt von 1,8 bis 2, ganz besonders bevorzugt von 1,9 bis 2.

In einer besonders bevorzugten Ausführungsform ist Komponente (A) eine Mischung aus von 60 bis 99 Gew.-% Polyarylenether (A1) und von 1 bis 40 Gew.-% Polyarylenether (A2), jeweils bezogen auf die Gewichtsmenge der Komponente (A).

In dieser bevorzugten Ausführungsform besteht die Komponente (A) besonders bevorzugt aus von 70 bis 98 Gew.-%, insbesondere von 80 bis 97 Gew.-%, des genannten Bestandteiles (A1) und von 2 bis 30 Gew.-%, insbesondere von 3 bis 20 Gew.-%, des genannten Bestandteils (A2), jeweils bezogen auf die Gewichtsmenge der Komponente (A).

Die Polyarylenether (A1) und (A2) gemäß der vorliegenden Erfindung können - abgesehen von den Endgruppen - gleich sein oder aus unterschiedlichen Bausteinen aufgebaut sein und/oder ein unterschiedliches Molekulargewicht aufweisen, sofern sie dann noch miteinander vollständig mischbar sind.

Es ist jedoch bevorzugt, wenn die Bestandteile (A1) und (A2) strukturell eine weitgehende Übereinstimmung aufweisen, insbesondere aus denselben Bausteinen aufgebaut sind und ein ähnliches Molekulargewicht aufweisen, insbesondere das zahlenmittlere Molekulargewicht der einen Komponente höchstens 30% größer ist als das der anderen Komponente.

Polyarylenether sind dem Fachmann als Polymerklasse bekannt. Im Prinzip kommen alle dem Fachmann bekannten und/oder nach bekannten Methoden herstellbaren Polyarylenether als Bestandteil der Komponente (A) in Betracht. Entsprechende Methoden werden weiter unten erläutert.

Im Rahmen der Komponente (A) bevorzugte Polyarylenether (A1) und (A2) sind unabhängig voneinander aus Bausteinen der allgemeinen Formel I aufgebaut: 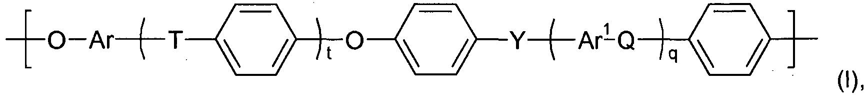 wobei die Symbole t, q, Q, T, Y, Ar und Ar¹ folgende Bedeutungen aufweisen:
- t, q:: unabhängig voneinander 0, 1, 2 oder 3,
- Q, T, Y:: unabhängig voneinander jeweils eine chemische Bindung oder Gruppe, ausgewählt aus -O-, -S-, -SO₂-, S=O, C=O, -N=N- und -CR^{a}R^{b}-, wobei R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe stehen, und wobei wenigstens eines aus Q, T und Y für -SO₂- steht und
- Ar, Ar¹:: unabhängig voneinander eine Arylengruppe mit von 6 bis 18 Kohlenstoff-atomen.

Falls Q, T oder Y unter den oben genannten Voraussetzungen eine chemischen Bindung ist, dann ist darunter zu verstehen, dass die links benachbarte und die rechts benachbarte Gruppe direkt miteinander über eine chemische Bindung verknüpft vorliegen.

Vorzugsweise werden Q, T und Y in Formel I allerdings unabhängig voneinander ausgewählt aus -O- und -SO₂-, mit der Maßgabe, dass wenigstens eines aus der Gruppe bestehend aus Q, T und Y für -SO₂- steht.

Sofern Q, T oder Y -CR^{a}R^{b}- sind, stehen R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe.

Bevorzugte C₁-C₁₂-Alkylgruppen umfassen lineare und verzweigte, gesättigte Alkylgruppen mit von 1 bis 12 Kohlenstoffatomen. Insbesondere sind folgende Reste zu nennen: C₁-C₆-Alkylrest, wie Methyl, Ethyl, n-Propyl, i-Propyl, n-Butyl, sek-Butyl, 2-oder 3-Methyl-pentyl und längerkettige Reste wie unverzweigtes Heptyl, Octyl, Nonyl, Decyl, Undecyl, Lauryl und die ein- oder mehrfach verzweigten Analoga davon.

Als Alkylreste in den vorgenannten einsetzbaren C₁-C₁₂-Alkoxygruppen kommen die weiter oben definierten Alkylgruppen mit von 1 bis 12 Kohlenstoffatomen in Betracht. Vorzugsweise verwendbare Cycloalkylreste umfassen insbesondere C₃-C₁₂-Cycloalkylreste, wie zum Beispiel Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclpentylethyl, -propyl, -butyl, -pentyl, -hexyl, Cyclohexylmethyl, -dimethyl, und -trimethyl.

Ar und Ar¹ bedeuten unabhängig voneinander eine C₆-C₁₈-Arylengruppe. Ausgehend von den weiter unten beschriebenen Ausgangsprodukten ist Ar vorzugsweise abgeleitet von einer elektronenreichen, leicht elektrophil angreifbaren aromatischen Substanz, die bevorzugt aus der Gruppe bestehend aus Hydrochinon, Resorcin, Dihydroxynaphthalin, insbesondere 2,7-Dihydroxynaphthalin, und 4,4'-Bisphenol ausgewählt wird. Vorzugsweise ist Ar¹ eine unsubstituierte C₆- oder C₁₂-Arylengruppe.

Als C₆-C₁₈-Arylengruppen Ar und Ar¹ kommen insbesondere Phenylengruppen, wie 1,2-, 1,3- und 1,4-Phenylen, Naphthylengruppen, wie beispielsweise 1,6-, 1,7-, 2,6-und 2,7-Naphthylen, sowie die von Anthracen, Phenanthren und Naphthacen abgeleiteten Arylengruppen in Betracht.

Vorzugsweise werden Ar und Ar¹ in der bevorzugten Ausführungsform gemäß Formel I unabhängig voneinander ausgewählt aus der Gruppe bestehend aus 1,4-Phenylen, 1,3-Phenylen, Naphthylen, insbesondere 2,7-Dihydroxynaphthylen, und 4,4'-Bisphenylen.

Im Rahmen der Komponente (A) bevorzugte Polyarylenether (A1) und (A2) sind solche, die mindestens eine der folgenden wiederkehrenden Bausteine Ia bis Io enthalten:

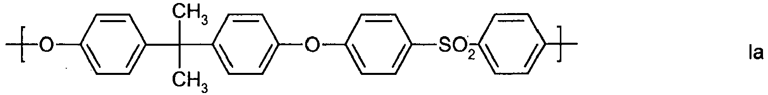

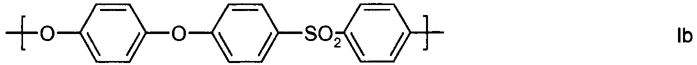

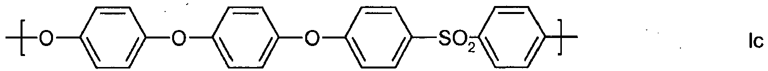

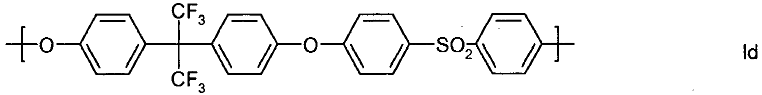

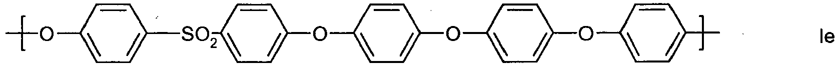

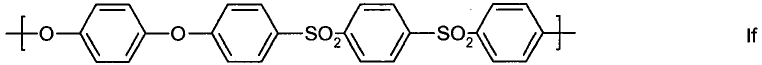

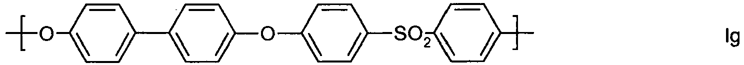

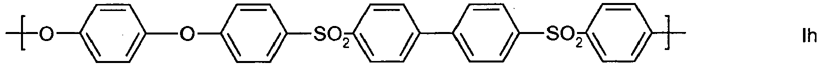

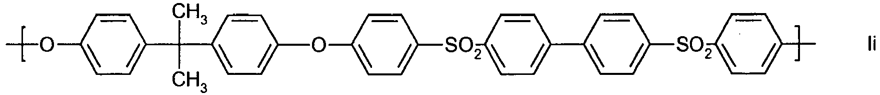

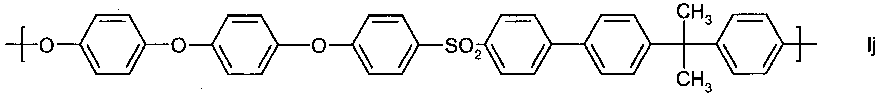

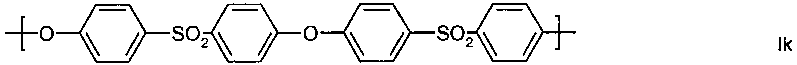

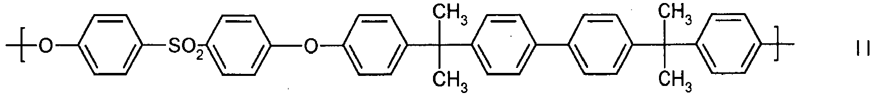

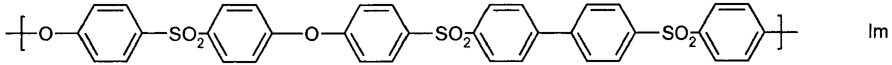

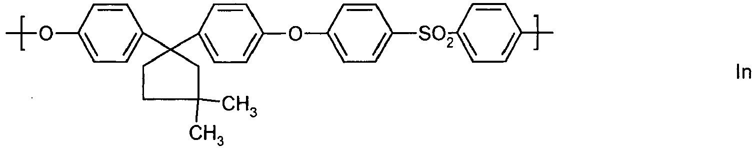

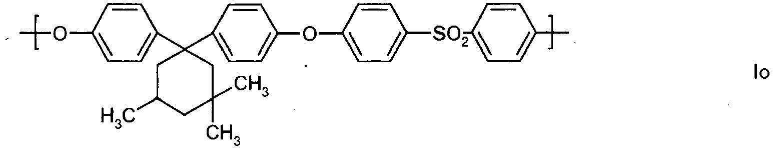

Zusätzlich zu den bevorzugt vorliegenden Bausteinen la bis Io sind auch solche Bausteine bevorzugt, in denen eine oder mehrere 1,4-Phenyleneinheiten, die von Hydrochinon abstammen, durch 1,3-Phenyleneinheiten, die von Resorcin abstammen oder durch Naphthyleneinheiten, die von Dihydroxynaphthalin abstammen, ersetzt sind.

Als Bausteine der allgemeinen Formel I besonders bevorzugt sind die Bausteine la, Ig und Ik. Es ist außerdem besonders bevorzugt, wenn die Polyarylenether der Komponente (A) im Wesentlichen aus einer Sorte Bausteine der allgemeinen Formel I, insbesondere aus einem Baustein ausgewählt aus la, Ig und Ik aufgebaut sind.

In einer besonders bevorzugten Ausführungsform ist Ar = 1,4-Phenylen, t = 1, q = 0, T ist eine chemische Bindung und Y = SO₂. Aus der vorgenannten Wiederholungseinheit aufgebaute besonders bevorzugte Polyarylenethersulfone werden als Polyphenylensulfon (PPSU) bezeichnet.

In einer weiteren besonders bevorzugten Ausführungsform ist Ar = 1,4-Phenylen, t = 1, q = 0, T = C(CH₃)₂ und Y = SO₂. Aus der vorgenannten Wiederholungseinheit aufgebaute besonders bevorzugte Polyarylenethersulfone werden als Polysulfon (PSU) bezeichnet.

In einer weiteren besonders bevorzugten Ausführungsform ist Ar = 1,4-Phenylen, t = 1, q = 0, T = Y = SO₂. Aus der vorgenannten Wiederholungseinheit aufgebaute besonders bevorzugte Polyarylenethersulfone werden als Polyethersulfon (PESU) bezeichnet. Diese Ausführungsform ist ganz besonders bevorzugt.

Abkürzungen wie PPSU, PESU und PSU entsprechen im Rahmen der vorliegenden Erfindung der DIN EN ISO 1043-1:2001.

Im Allgemeinen weisen die bevorzugten Polyarylenether (A1) und (A2) mittlere Molekulargewichte Mₙ (Zahlenmittel) im Bereich von 5.000 bis 60.000 g/mol und relative Viskositäten von 0,20 bis 0,95 dl/g auf. Die relativen Viskositäten der Polyarylenether werden in 1 gew.-%iger N-Methylpyrrolidon-Lösung bei 25°C nach DIN EN ISO 1628-1 bestimmt.

Die Polyarylenether (A1) und (A2) der vorliegenden Erfindung weisen vorzugsweise gewichtsmittlere Molekulargewichte M_{w} von 10.000 bis 150.000 g/mol, insbesondere von 15.000 bis 120.000 g/mol, besonders bevorzugt von 18.000 bis 100.000 g/mol auf, bestimmt mittels Gelpermeationschromatographie im Lösungsmittel Dimethylacetamid gegen engverteiltes Polymethylmethacrylat als Standard.

Herstellungsverfahren, die zu den vorgenannten Polyarylenethern führen, sind dem Fachmann an sich bekannt und beispielsweise in Herman F. Mark, "Encyclopedia of Polymer Science and Technology", third edition, Volume 4, 2003 auf den Seiten 2 bis 8 sowie in Hans R. Kricheldorf, "Aromatic Polyethers" in: Handbook of Polymer Synthesis, second edition, 2005 auf den Seiten 427 bis 443 beschrieben.

Besonders bevorzugt ist die Umsetzung mindestens einer aromatischen Verbindung mit zwei Halogensubstituenten und mindestens einer aromatischen Verbindung mit zwei funktionellen Gruppen, die gegenüber vorgenannten Halogensubstituenten reaktiv sind, in aprotischen polaren Lösungsmitteln in Gegenwart von wasserfreiem Alkalicarbonat, insbesondere Natrium-, Kalium-, Calciumcarbonat oder Mischungen davon, wobei Kaliumcarbonat ganz besonders bevorzugt ist. Eine besonders geeignete Kombination ist N-Methylpyrrolidon als Lösungsmittel und Kaliumcarbonat als Base.

Vorzugsweise weisen die Polyarylenether (A1) entweder Halogenendgruppen, insbesondere Chlorendgruppen, oder veretherte Endgruppen, insbesondere Alkyletherendgruppen, auf, welche durch Umsetzung der OH- bzw. Phenolat-Endgruppen mit geeigneten Veretherungsmitteln erhältlich sind.

Geeignete Veretherungsmittel sind beispielsweise monofunktionelles Alkyl- oder Arylhalogenid, beispielsweise C₁-C₆-Alkylchlorid, -bromid oder -iodid, bevorzugt Methylchlorid, oder Benzylchlorid, -bromid oder -iodid oder Mischungen davon. Bevorzugte Endgruppen im Rahmen der Polyarylenether der Komponente (A1) sind Halogen, insbesondere Chlor, Alkoxy, insbesondere Methoxy, Aryloxy, insbesondere Phenoxy, oder Benzyloxy.

Im Folgenden wird die Herstellung der Polyarylenether (A2) diskutiert. Ein bevorzugtes Verfahren zur Herstellung von Polyarylenethern der Komponente (A2) wird nachfolgend beschrieben und umfasst folgende Schritte in der Reihenfolge a-b-c:
(a) Bereitstellung mindestens eines Polyarylenethers (A2*) in Gegenwart eines Lösungsmittels (L), der einen der gewünschten Komponente (A2) entsprechenden Gehalt an phenolischen Endgruppen aufweist, wobei dessen phenolische Endgruppen als Phenolat-Endgruppen vorliegen, und der vorzugsweise aufgebaut ist aus Bausteinen der allgemeinen Formel I wie oben definiert,
(b) Zugabe mindestens einer Säure, vorzugsweise mindestens einer mehrfunktionellen Carbonsäure, und
(c) Gewinnung der Polyarylenether der Komponente (A2) als Feststoff.

Die Bereitstellung des Polyarylenethers (A2*) erfolgt dabei bevorzugt in Form einer Lösung im Lösungsmittel (L).

Die Bereitstellung der beschriebenen Polyarylenether (A2*) kann im Prinzip auf verschiedene Weise erfolgen. Beispielsweise kann ein entsprechender Polyarylenether (A2*) direkt mit einem geeigneten Lösungsmittel in Kontakt gebracht und direkt, d. h. ohne weitere Umsetzung, im erfindungsgemäßen Verfahren eingesetzt werden. Alternativ können Präpolymere von Polyarylenethern eingesetzt und zur Umsetzung in Gegenwart eines Lösungsmittels gebracht werden, wobei die beschriebenen Polyarylenether (A2*) in Gegenwart des Lösungsmittels entstehen.

Die Bereitstellung des Polyarylenethers oder der Polyarylenether (A2*) in Schritt (a) erfolgt jedoch vorzugsweise durch Umsetzung mindestens einer Ausgangsverbindung der Struktur X-Ar-Y (s1) mit mindestens einer Ausgangsverbindung der Struktur HO-Ar¹-OH (s2) in Gegenwart eines Lösungsmittels (L) und einer Base (B), wobei
- Y ein Halogenatom ist,
- X ausgewählt wird aus Halogenatomen und OH und
- Ar und Ar¹ unabhängig voneinander eine Arylengruppe mit 6 bis 18 Kohlenstoffatomen darstellen.

Das Verhältnis von (s1) und (s2) wird dabei so gewählt, dass der gewünschte Gehalt an phenolischen Endgruppen entsteht. Geeignete Ausgangsverbindungen sind dem Fachmann bekannt oder können nach bekannten Methoden hergestellt werden. Hydrochinon, Resorcin, Dihydroxynaphthalin, insbesondere 2,7- Dihydroxynaphthalin, 4,4'-Dihydroxydiphenylsulfon, Bisphenol A und 4,4'-Dihydroxybiphenyl sind als Ausgangsverbindung (s2) besonders bevorzugt.

Es ist jedoch auch möglich, trifunktionelle Verbindungen zu verwenden. In diesem Fall entstehen verzweigte Strukturen. Sofern eine trifunktionelle Ausgangsverbindung (s2) zum Einsatz kommt, ist 1,1,1-Tris(4-hydroxyphenyl)ethan bevorzugt.

Die einzusetzenden Mengenverhältnisse ergeben sich im Prinzip aus der Stöchiometrie der ablaufenden Polykondensationsreaktion unter rechnerischer Abspaltung von Chlorwasserstoff und werden vom Fachmann in bekannter Weise eingestellt. Um jedoch die Zahl der phenolischen OH-Endgruppen zu erhöhen, ist ein Überschuss an (s2) zu bevorzugen.

Besonders bevorzugt beträgt das Molverhältnis (s2)/(s1) in dieser Ausführungsform von 1,005 bis 1,2, insbesondere 1,01 bis 1,15, ganz besonders bevorzugt 1,02 bis 1,1.

Alternativ kann auch eine Ausgangsverbindung (s1) mit X = Halogen und Y = OH eingesetzt werden. In diesem Fall erfolgt die Einstellung eines Überschusses von Hydroxygruppen durch Zugabe der Ausgangsverbindung (s2). In diesem Fall beträgt das Verhältnis der eingesetzten phenolischen Endgruppen zu Halogen vorzugsweise von 1,01 bis 1,2, insbesondere 1,03 bis 1,15, ganz besonders bevorzugt 1,05 bis 1,1.

Vorzugsweise beträgt der Umsatz bei der Polykondensation mindestens 0,9, wodurch ein ausreichend hohes Molekulargewicht gewährleistet wird. Sofern als Vorstufe des Polyarylenethers ein Präpolymer verwendet wird, bezieht sich der Polymerisationsgrad auf die Zahl der eigentlichen Monomere.

Bevorzugte Lösungsmittel (L) sind aprotische polare Lösungsmittel. Geeignete Lösungsmittel weisen außerdem einen Siedepunkt im Bereich von 80 bis 320°C, insbesondere 100 bis 280°C, bevorzugt von 150 bis 250°C auf. Geeignete aprotische polare Lösungsmittel sind beispielsweise hochsiedende Ether, Ester, Ketone, asymmetrisch halogenierte Kohlenwasserstoffe, Anisol, Dimethylformamid, Dimethylsulfoxid, Sulfolan, N-Ethyl-2- pyrrolidon und N-Methyl-2-pyrrolidon.

Vorzugsweise erfolgt die Umsetzung der Ausgangsverbindungen (s1) und (s2) in den genannten aprotischen polaren Lösungsmitteln (L), insbesondere N-Methyl-2-pyrrolidon.

Dem Fachmann ist an sich bekannt, dass die Umsetzung der phenolischen OH-Gruppen vorzugsweise in Gegenwart einer Base (B) erfolgt, um die Reaktivität gegenüber den Halogensubstituenten der Ausgangsverbindung (s1) zu erhöhen.

Vorzugsweise sind die Basen (B) wasserfrei. Geeignete Basen sind insbesondere wasserfreies Alkalicarbonat, vorzugsweise Natrium-, Kalium-, Calciumcarbonat oder Mischungen davon, wobei Kaliumcarbonat ganz besonders bevorzugt ist.

Eine besonders bevorzugte Kombination ist N-Methyl-2-pyrrolidon als Lösungsmittel (L) und Kaliumcarbonat als Base (B).

Die Umsetzung der geeigneten Ausgangsverbindungen (s1) und (s2) wird bei einer Temperatur von 80 bis 250°C, bevorzugt 100 bis 220°C durchgeführt, wobei die Obergrenze der Temperatur durch den Siedepunkt des Lösungsmittels begrenzt wird. Die Umsetzung erfolgt vorzugsweise in einem Zeitintervall von 2 bis 12 h, insbesondere von 3 bis 8 h.

Es hat sich als vorteilhaft erwiesen, in Anschluss an Schritt (a) und vor Ausführung des Schrittes (b) eine Filtration der Polymerlösung durchzuführen. Hierdurch wird der bei der Polykondensation gebildete Salzanteil sowie eventuell gebildete Gelkörper entfernt.

Es hat sich zudem als vorteilhaft herausgestellt, im Rahmen von Schritt (a) die Menge des Polyarylenethers (A2*) bezogen auf das Gesamtgewicht der Mischung aus Polyarylenether (A2*) und Lösungsmittel (L) von 10 bis 70 Gew.-%, vorzugsweise von 15 bis 50 Gew.-% einzustellen.

Im Rahmen von Schritt (b) erfolgt die Zugabe mindestens einer Säure, vorzugsweise mindestens einer mehrfunktionellen Carbonsäure zum Polyarylenether (A2*) aus Schritt (a), vorzugsweise zur Lösung des Polyarylenethers (A2*) im Lösungsmittel (L).

Unter "mehrfunktionell" ist eine Funktionalität von mindestens 2 zu verstehen. Die Funktionalität ist die (gegebenenfalls mittlere) Zahl an COOH-Gruppen pro Molekül. Unter mehrfunktionell wird eine Funktionalität von zwei oder höher verstanden. Im Rahmen der vorliegenden Erfindung bevorzugte Carbonsäuren sind di- und trifunktionelle Carbonsäuren.

Die Zugabe der mehrfunktionellen Carbonsäure kann auf verschiedene Weise erfolgen, insbesondere in fester oder flüssiger Form oder in Form einer Lösung, vorzugsweise in einem Lösungsmittel, welches mit dem Lösungsmittel (L) mischbar ist.

Vorzugsweise weist die mehrfunktionelle Carbonsäure ein zahlenmittleres Molekulargewicht von höchstens 1500 g/mol, insbesondere höchstens 1200 g/mol auf. Gleichzeitig weist die mehrfunktionelle Carbonsäure vorzugsweise ein zahlenmittleres Molekulargewicht von mindestens 90 g/mol auf.

Geeignete mehrfunktionelle Carbonsäuren sind insbesondere solche gemäß der allgemeinen Struktur II:

HOOC-R-COOH (II),

wobei R ein Kohlenwasserstoffrest mit von 2 bis 20 Kohlenstoffatomen repräsentiert, der optional weitere funktionelle Gruppen, vorzugsweise ausgewählt aus OH und COOH, enthält.

Bevorzugte mehrfunktionelle Carbonsäuren sind C₄ bis C₁₀-Dicarbonsäuren, insbesondere Bernsteinsäure, Glutarsäure, Adipinsäure, und Tricarbonsäuren, insbesondere Zitronensäure. Besonders bevorzugte mehrfunktionelle Carbonsäuren sind Bernsteinsäure und Zitronensäure.

Um eine ausreichende Umwandlung der Phenolat-Endgruppen in phenolische Endgruppen zu gewährleisten hat es sich als vorteilhaft erwiesen, die Menge der eingesetzten mehrfunktionellen Carbonsäure oder mehrfunktionellen Carbonsäuren in Bezug auf die Menge der Phenolat-Endgruppen einzustellen.

Es ist bevorzugt im Rahmen von Schritt (b) eine mehrfunktionelle Carbonsäure in einer Menge von 25 bis 200 mol-% Carboxylgruppen, vorzugsweise von 50 bis 150 mol-% Carboxylgruppen, besonders bevorzugt von 75 bis 125 mol-% Carboxylgruppen, bezogen auf die Stoffmenge an phenolischen Endgruppen zuzugeben.

Wird zu wenig Säure dosiert, ist das Fällverhalten der Polymerlösung ungenügend, während bei einer deutlichen Überdosierung eine Verfärbung des Produktes bei der weiteren Verarbeitung auftreten kann.

Im Rahmen von Schritt (c) erfolgt die Gewinnung des Polyarylenethers (A2) als Feststoff. Grundsätzlich kommen verschiedene Verfahren zur Gewinnung als Feststoff in Betracht. Bevorzugt ist jedoch eine Gewinnung der Polymerzusammensetzung durch Ausfällung.

Die bevorzugte Ausfällung kann insbesondere durch Mischung des Lösungsmittels (L) mit einem schlechten Lösungsmittel (L') erfolgen. Ein schlechtes Lösungsmittel ist ein Lösungsmittel, in dem sich die Polymerzusammensetzung nicht löst. Ein solches schlechtes Lösungsmittel ist vorzugsweise ein Gemisch aus einem Nicht-Lösungsmittel und einem Lösungsmittel. Ein bevorzugtes Nicht-Lösungsmittel ist Wasser. Ein bevorzugtes Gemisch (L') aus einem Lösungsmittel mit einem Nicht-Lösungsmittel ist vorzugsweise ein Gemisch aus dem Lösungsmittel (L), insbesondere N-Methyl-4-pyrrolidon, und Wasser. Es ist bevorzugt, die Polymerlösung aus Schritt (b) zu dem schlechten Lösungsmittel (L') hinzuzugeben, was zur Ausfällung der Polymerzusammensetzung führt. Dabei wird vorzugsweise ein Überschuss des schlechten Lösungsmittels eingesetzt. Besonders bevorzugt erfolgt die Zugabe der Polymerlösung aus Schritt (a) in fein verteilter Form, insbesondere in Tropfenform.

Sofern als schlechtes Lösungsmittel (L') eine Mischung aus dem Lösungsmittel (L), insbesondere N-Methyl-2-pyrrolidon, und einem Nicht-Lösungsmittel, insbesondere Wasser, verwendet wird, dann ist ein Mischungsverhältnis Lösungsmittel:Nicht-lösungsmittel von 1:2 bis 1:100, insbesondere 1:3 bis 1:50 zu bevorzugen.

Als schlechtes Lösungsmittel (L') ist eine Mischung aus Wasser und N-Methyl-2-pyrrolidon (NMP) in Kombination mit N-Methyl-2-pyrrolidon als Lösungsmittel (L) bevorzugt. Besonders bevorzugt ist als schlechtes Lösungsmittel (L') ein Gemisch NMP/Wasser von 1:3 bis 1:50, insbesondere 1:30.

Die Ausfällung erfolgt besonders effizient, wenn der Gehalt der Polymerzusammensetzung im Lösungsmittel (L) bezogen auf das Gesamtgewicht der Mischung aus Polymerzusammensetzung und Lösungsmittel (L) von 10 bis 50 Gew.-%, vorzugsweise von 15 bis 35 Gew.-% beträgt.

Komponente (A2) weist vorzugsweise einen Kaliumgehalt von höchstens 600 ppm auf. Der Kaliumgehalt wird mittels Atomspektrometrie bestimmt.

### Komponente B

Die erfindungsgemäßen Formmassen enthalten als Komponente (B) mindestens ein Polyarylensulfid. Als Komponente (B) kommen prinzipiell alle Polyarylensulfide in Betracht.

Komponente (B) liegt in den erfindungsgemäßen thermoplastischen Formmassen vorzugsweise in Mengen von 5 bis 65 Gew.-%, besonders bevorzugt von 5 bis 45 Gew.- %, insbesondere von 5 bis 30 Gew.-%, ganz besonders bevorzugt von 10 bis 20 Gew.- % vor, jeweils bezogen auf die Gesamtmenge der Komponenten (A) bis (E).

Vorzugsweise bestehen die Polyarylensulfide der Komponente (B) von 30 bis 100 Gew.-% aus Wiederholungseinheiten gemäß der allgemeinen Formel -Ar-S-, wobei - Ar- eine Arylengruppe mit 6 bis 18 Kohlenstoffatomen darstellt.

Bevorzugt werden Polyarylensulfide, die mindestens 30 Gew.-%, insbesondere mindestens 70 Gew.-% Wiederholungseinheiten III: 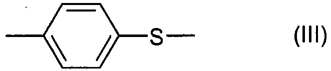 bezogen auf das Gesamtgewicht aller Wiederholungseinheiten enthalten. Geeignete weitere Wiederholungseinheiten sind insbesondere 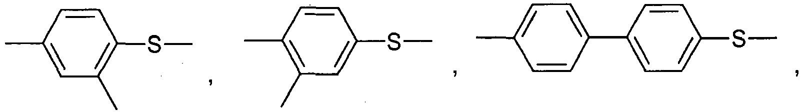 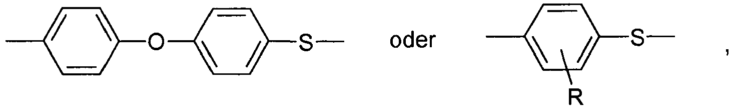 worin R C₁- bis C₁₀-Alkyl, bevorzugt Methyl bedeutet. Die Polyarylensulfide können Homopolymere, statistische Copolymere oder Blockcopolymere sein, wobei Homopolymere (identische Wiederholungseinheiten) bevorzugt sind. Ganz besonders bevorzugte Polyarylensulfide bestehen zu 100 Gew.-% aus Wiederholungseinheiten gemäß der allgemeinen Formel III. Besonders bevorzugt ist Komponente (B) somit ein Polyphenylensulfid, insbesondere Poly(1,4-phenylensulfid).

Als Endgruppen der erfindungsgemäß verwendeten Polyarylensulfide kommen insbesondere Halogen, Thiol oder Hydroxy, bevorzugt Halogen in Betracht.

Die Polyarylensulfide der Komponente (B) können verzweigt oder unverzweigt sein. Vorzugsweise sind die Polyarylensulfide der Komponente (B) linear, d. h. nicht verzweigt.

Die Polyarylensulfide der Komponente (B) weisen vorzugsweise gewichtsmittlere Molekulargewichte von 5.000 bis 100.000 g/mol auf.

Derartige Polyarylensulfide sind an sich bekannt oder können nach bekannten Methoden hergestellt werden. Entsprechende Herstellungsmethoden sind beispielsweise in Hans R. Kricheldorf, "Aromatic Polyethers" in: Handbook of Polymer Synthesis, second edition, 2005 auf den Seiten 486 bis 492 beschrieben.

Insbesondere können sie, wie in der US 2,513,188 beschrieben, durch Umsetzen von Halogenaromaten mit Schwefel oder Metallsulfiden hergestellt werden. Ebenso ist es möglich, Metallsalze von mit Halogen substituierten Thiophenolen zu erhitzen (siehe GB-B 962 941). Zu den bevorzugten Synthesen von Polyarylensulfiden zählt die Umsetzung von Alkalimetallsulfiden mit Halogenaromaten in Lösung, wie sie z.B. der US 3,354,129 zu entnehmen ist. Weitere Verfahren sind in der US 3,699,087 und in der US 4,645,826 beschrieben.

### Komponente C

Erfindungsgemäß enthalten die thermoplastischen Formassen mindestens einen funktionalisierten Polyarylenether umfassend Carboxylgruppen, vorzugsweise solche mit einer Viskositätszahl gemäß DIN EN ISO 1628-1 von 45 bis 65 ml/g gemessen in 1 gew.-%iger Lösung in N-Methyl-2-pyrrolidon bei 25°C. Die Viskositätszahl gemäß DIN EN ISO 1628-1 der funktionalisierten Polyarylenether der Komponente (C) gemessen in 1 gew.-%iger Lösung in N-Methyl-2-pyrrolidon bei 25°C beträgt vorzugsweise mindestens 46 ml/g, besonders bevorzugt mindestens 47 ml/g, insbesondere mindestens 48 ml/g.

Andererseits führt die Verwendung von Polyarylenethern umfassend Carboxylgruppen mit einer Viskositätszahl gemäß DIN EN ISO 1628-1 von mehr als 65 ml/g gemessen in 1 gew.-%iger Lösung in N-Methyl-2-pyrrolidon bei 25°C zu einer nachteiligen Reduktion der Fließfähigkeit, ohne dass eine weitere Verbesserung der mechanischen Eigenschaften erhalten wird. Dementsprechend ist die Viskositätszahl gemäß DIN EN ISO 1628-1 der Polyarylenether der Komponente (C) vorzugsweise nach oben beschränkt und beträgt bevorzugt höchstens 65 ml/g, besonders bevorzugt höchstens 61 ml/g, insbesondere höchstens 57 ml/g, jeweils gemessen in 1 gew.-%iger Lösung in N-Methyl-2-pyrrolidon bei 25°C.

Eine Viskositätszahl im angegebenen Bereich führt in thermoplastischen Formmassen auf Basis von Polyarylenethern und Polyarylensulfiden enthaltend teilchen- oder faserförmige Füllstoffe zu den erfindungsgemäß verbesserten mechanischen Eigenschaften bei gleichzeitig guter Verarbeitbarkeit. Ohne sich einschränken zu wollen, besteht die Vorstellung, dass die funktionalisierten Polyarylenether der Komponente (C) aufgrund ihrer chemischen Struktur und der definierten Viskositätszahl synergistisch mit den Füllstoffen, insbesondere Glasfasern, wechselwirken.

Vorzugsweise enthalten die erfindungsgemäßen thermoplastischen Formmassen als Komponente (C) mindestens einen funktionalisierten Polyarylenether, der Bausteine der allgemeinen Formel I wie oben definiert sowie Bausteine der allgemeinen Formel IV enthält: 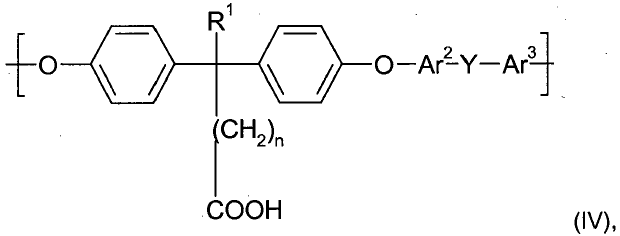 worin
- n: 0, 1, 2, 3, 4, 5 oder 6 ist;
- R¹: Wasserstoff, eine C₁ bis C₆-Alkylgruppe, oder -(CH₂)ₙ-COOH bedeutet;
- Ar² und Ar³: gleich oder unterschiedlich sein können und unabhängig voneinander eine C₆ bis C₁₈-Arylengruppe darstellen und
- Y: eine chemische Bindung oder Gruppe wiedergibt, die ausgewählt ist aus -O-, -S-, -SO₂-, S=O, C=O, -N=N- und -CR^{a}R^{b}-, wobei R^{a} und R^{b} gleich oder ungleich sein können und unabhängig voneinander jeweils für ein Wasserstoffatom oder eine C₁-C₁₂-Alkyl-, C₁-C₁₂-Alkoxy- oder C₆ bis C₁₈-Arylgruppe stehen.

Vorzugsweise beträgt der Anteil von Bausteinen gemäß der allgemeinen Formel IV bezogen auf die Summe der Bausteine gemäß Formel I und Formel IV von 0,5 bis 3 mol-%, vorzugsweise von 0,6 bis 2 mol-%, besonders bevorzugt von 0,7 bis 1,5 mol-%.

Der Anteil von Bausteinen gemäß der allgemeinen Formel IV bezogen auf die Summe der Bausteine gemäß Formel I und Formel IV wird im Rahmen der vorliegenden Erfindung grundsätzlich mittels ¹H-NMR-Spektroskopie mit einer definierten Menge 1,3,5-Trimethoxybenzol als interner Standard bestimmt. Die Umrechnung von Gew.-% in mol-% ist dem Fachmann bekannt.

Im Rahmen der allgemeinen Formel IV gilt vorzugsweise n = 2 und R¹ = Methyl.

Im Rahmen der allgemeinen Formel IV gilt zudem vorzugsweise Ar² = Ar³ = 1,4-Phenylen und Y = -SO₂-.

Die in den erfindungsgemäßen Formmassen verwendeten, funktionalisierten Polyarylenether (Komponente C) sind an sich bekannte Verbindungen oder sind nach bekannten Verfahren herstellbar.

Beispielsweise sind die funktionalisierten Polyarylenether der Komponente (C) zugänglich in Anlehnung an die EP-A-0 185 237 sowie nach den von I.W. Parsons et al., in Polymer, 34, 2836 (1993) und T. Koch, H. Ritter, in Macromol. Phys. 195, 1709 (1994) beschriebenen Verfahren.

Die Polyarylenether sind demnach insbesondere erhältlich durch Polykondensation von Verbindungen der allgemeinen Formel V: 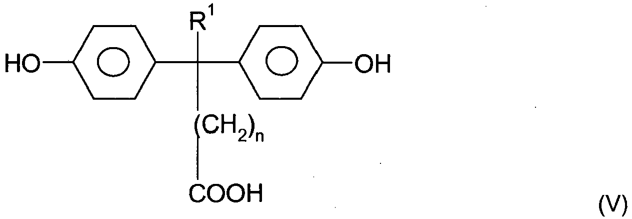 worin R¹ und n die oben angegebenen Bedeutungen besitzen, mit wenigstens einer weiteren gegenüber den Verbindungen der allgemeinen Formel V reaktiven aromatischen Verbindung, wie insbesondere 4,4'-Dichlordiphenylsulfon, und gegebenenfalls weiteren hydroxyfunktionalisierten Verbindungen, wie z.B. Bisphenol A und/oder Bisphenol S und/oder 4,4'-Dihydroxybiphenyl. Geeignete Reaktionspartner sind dem Fachmann allgemein bekannt.

Zur Herstellung der funktionalisierten Polyarylenether der Komponente (C) können prinzipiell auch die für Polyarylenether der Komponente (A) verwendeten Methoden eingesetzt werden, wobei ebenfalls die Lösungspolymerisation in dipolar aprotischen Lösungsmitteln unter Baseneinwirkung bevorzugt wird.

Die Ausführungen bezüglich Komponente (A) hinsichtlich bevorzugter Strukturelemente der allgemeinen Formel I gelten entsprechend für die funktionalisierten Polyarylenether der Komponente (C).

Insbesondere ist es bevorzugt, wenn die Polyarylenether der Komponenten (A) und (C) strukturell ähnlich sind, insbesondere auf den gleichen Monomerbausteinen basieren und sich lediglich in Bezug auf die Bausteine der allgemeinen Formel IV im Rahmen der Komponente (C) unterscheiden. Es ist besonders bevorzugt, wenn sowohl Komponente (A) als auch Komponente (C) auf Bausteinen des Typs PESU wie oben definiert oder wenn sowohl Komponente (A) als auch Komponente (C) auf Bausteinen des Typs PPSU wie oben definiert oder wenn sowohl Komponente (A) als auch Komponente (C) auf Bausteinen des Typs PSU wie oben definiert basieren. Unter "basieren" ist in die-sem Zusammenhang zu verstehen, dass sowohl Komponente (A) als auch Komponente (C) aus den gleichen Bausteinen aufgebaut sind und sich lediglich dadurch unterscheiden, dass die Komponente (C) zusätzlich funktionalisiert ist und vorzugsweise Monomerbausteine der allgemeinen Formel IV wie oben definiert enthält. Besonders bevorzugt enthalten die Polyarylenether der Komponente (A) und die funktionalisierten Polyarylenether der Komponente (C) jeweils die gleichen Bausteine der allgemeinen Formel I.

Geeignete Bausteine im Rahmen der allgemeinen Formel IV sind insbesondere: 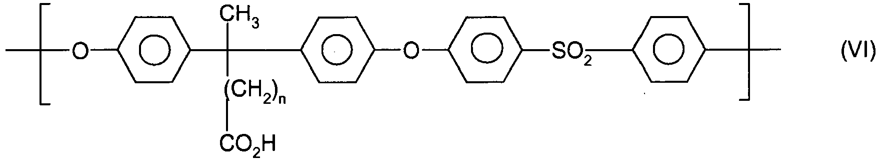 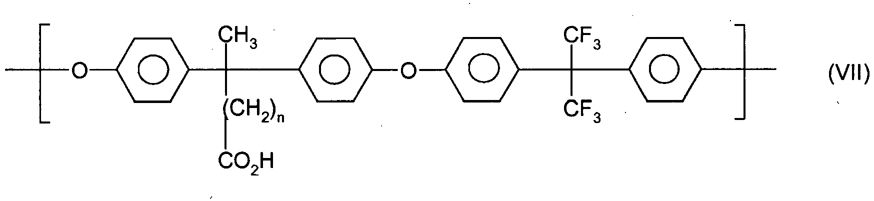 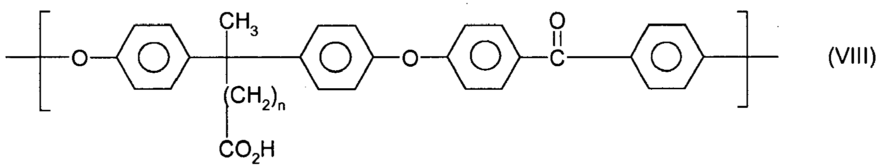 worin n jeweils für eine ganze Zahl von 0 bis 4 steht. Der Baustein VI ist ganz besonders bevorzugt.

### Komponente D

Die thermoplastischen Formmassen der vorliegenden Erfindung enthalten als Komponente (D) mindestens einen faser- oder teilchenförmigen Füllstoff, vorzugsweise in einer Menge von 5 bis 70 Gew.-%, besonders bevorzugt von 15 bis 70 Gew.-%, insbesondere von 15 bis 65 Gew.-%, bezogen auf insgesamt 100 Gew.-% der Komponenten (A) bis (E).

Die erfindungsgemäßen Formmassen können insbesondere teilchenförmige oder faserförmige Füllstoffe enthalten, wobei faserförmige Füllstoffe besonders bevorzugt sind.

Bevorzugte faserförmige Füllstoffe sind Kohlenstofffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte, bevorzugt einer Polyurethanschlichte und einem Haftvermittler ausgerüstet sein. Im Allgemeinen haben die verwendeten Kohlenstoff- und Glasfasern einen Durchmesser im Bereich von 6 bis 20 µm. Komponente (D) besteht somit besonders bevorzugt aus Glasfasern.

Die Einarbeitung der Glasfasern kann sowohl in Form von Kurzglasfasern als auch in Form von Endlossträngen (Rovings) erfolgen. Im fertigen Spritzgussteil liegt die mittlere Länge der Glasfasern vorzugsweise im Bereich von 0,08 bis 0,5 mm.

Kohlenstoff- oder Glasfasern können auch in Form von Geweben, Matten oder Glasseidenrovings eingesetzt werden.

Als teilchenförmige Füllstoffe eignen sich amorphe Kieselsäure, Carbonate wie Magnesiumcarbonat und Kreide, gepulverter Quarz, Glimmer, unterschiedlichste Silikate wie Tone, Muskovit, Biotit, Suzoit, Zinnmaletit, Talkum, Chlorit, Phlogopit, Feldspat, Calciumsilikate wie Wollastonit oder Aluminiumsilikate wie Kaolin, besonders kalzinierter Kaolin.

Bevorzugte teilchenförmige Füllstoffe sind solche, in denen mindestens 95 Gew.-%, bevorzugt mindestens 98 Gew.-% der Teilchen einen Durchmesser (größter Durchmesser durch das geometrische Zentrum), bestimmt am fertigen Produkt, von weniger als 45 µm, bevorzugt weniger als 40 µm aufweisen und deren so genanntes Aspektverhältnis im Bereich von 1 bis 25, bevorzugt im Bereich von 2 bis 20 liegt, bestimmt am fertigen Produkt. Das Aspektverhältnis ist das Verhältnis von Teilchendurchmesser zu Dicke (größte Ausdehnung zu kleinster Ausdehnung jeweils durch das geometrische Zentrum).

Die Teilchendurchmesser können dabei z. B. dadurch bestimmt werden, dass elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, deren Durchmesser weniger als 40 µm beträgt, kann auch mittels Siebanalyse gemessen werden.

Besonders bevorzugt werden als teilchenförmige Füllstoffe Talkum, Kaolin, wie kalzinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 µm und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 µm und ein Aspektverhältnis von 1,2 bis 20, jeweils bestimmt am fertigen Produkt.

Die thermoplastischen Formmassen können außerdem weitere Zusatzstoffe und/oder Verarbeitungshilfsmittel als Komponente E enthalten.

### Komponente E

Die erfindungsgemäßen Formmassen können als Bestandteile der Komponente (E) Hilfsstoffe, insbesondere Verarbeitungshilfsmittel, Pigmente, Stabilisatoren, Flammschutzmittel oder Mischungen unterschiedlicher Additive enthalten. Übliche Zusatzstoffe sind beispielsweise auch Oxidationsverzögerer, Mittel gegen Wärmezersetzung und Zersetzung durch ultraviolettes Licht, Gleit- und Entformungsmittel, Farbstoffe und Weichmacher.

Der Anteil der Komponente (E) in der erfindungsgemäßen Formmasse beträgt insbesondere von 0 bis zu 30, vorzugsweise von 0 bis zu 20 Gew.-%, insbesondere 0 bis 15 Gew.-%, bezogen auf das Gesamtgewicht der Komponenten (A) bis (E). Falls die Komponente E Stabilisatoren beinhaltet, beträgt der Anteil dieser Stabilisatoren üblicherweise bis zu 2 Gew.-%, vorzugsweise 0,01 bis 1 Gew.-%, insbesondere 0,01 bis 0,5 Gew.-%, bezogen auf die Summe der Gew.-% der Komponenten (A) bis (E).

Pigmente und Farbstoffe sind allgemein in Mengen von 0 bis 6, bevorzugt von 0,05 bis 5 und insbesondere von 0,1 bis 3 Gew.-%, bezogen auf die Summe der Gew.-% der Komponenten (A) bis (E), enthalten.

Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, Seiten 494 bis 510. Als erste bevorzugte Gruppe von Pigmenten sind Weißpigmente zu nennen, wie Zinkoxid, Zinksulfid, Bleiweiß [2 PbCO₃·Pb(OH)₂], Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet. Schwarze Farbpigmente, die erfindungsgemäß eingesetzt werden können, sind Eisenoxidschwarz (Fe₃O₄), Spinellschwarz [Cu(Cr, Fe)₂O₄], Manganschwarz (Mischung aus Mangandioxid, Siliciumdioxid und Eisenoxid), Kobaltschwarz und Antimonschwarz sowie besonders bevorzugt Ruß, der meist in Form von Fumace- oder Gasruß eingesetzt wird. Siehe hierzu G. Benzing, Pigmente für Anstrichmittel, Expert-Verlag (1988), Seiten 78 ff.

Zur Einstellung bestimmter Farbtöne können anorganische Buntpigmente, wie Chromoxidgrün oder organische Buntpigmente, wie Azopigmente oder Phthalocyanine eingesetzt werden. Derartige Pigmente sind dem Fachmann bekannt.

Oxidationsverzögerer und Wärmestabilisatoren, die den thermoplastischen Formmassen gemäß der Erfindung zugesetzt werden können, sind zum Beispiel Halogenide von Metallen der Gruppe I des Periodensystems, zum Beispiel Natrium-, Kalium-, Lithium-Halogenide, zum Beispiel Chloride, Bromide oder Iodide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf die Summe der Gew.-% der Komponenten (A) bis (E) einsetzbar.

Beispiele für UV-Stabilisatoren sind verschiedene substituierte Resorcine, Salicylate, Benzotriazole und Benzophenone, die im Allgemeinen in Mengen bis zu 2 Gew.-% eingesetzt werden.

Gleit- und Entformungsmittel, die in der Regel in Mengen bis zu 1 Gew.-% bezogen auf die Summe der Gew.-% der Komponenten (A) bis (E) zugesetzt werden, sind Stearylalkohol, Stearinsäurealkylester und -amide sowie Ester des Pentaerythrits mit langkettigen Fettsäuren. Es können auch Dialkylketone, zum Beispiel Distearylketon, eingesetzt werden.

Als bevorzugten Bestandteil enthalten die erfindungsgemäßen Formmassen von 0,1 bis 2, bevorzugt 0,1 bis 1,75, besonders bevorzugt 0,1 bis 1,5 Gew.-% und insbesondere von 0,1 bis 0,9 Gew.-% (bezogen auf die Summe der Gew.-% der Komponenten (A) bis (E)) an Stearinsäure und/oder Stearaten. Im Prinzip können auch andere Stearinsäurederivate wie Ester der Stearinsäure eingesetzt werden.

Stearinsäure wird bevorzugt durch Hydrolyse von Fetten hergestellt. Die dabei erhaltenen Produkte stellen üblicherweise Mischungen aus Stearinsäure und Palmitinsäure dar. Daher haben solche Produkte einen breiten Erweichungsbereich, zum Beispiel von 50 bis 70 °C, je nach Zusammensetzung des Produkts. Bevorzugt werden Produkte mit einem Anteil an Stearinsäure von mehr als 20, besonders bevorzugt mehr als 25 Gew.-% verwendet. Es kann auch reine Stearinsäure (> 98 %) verwendet werden.

Des Weiteren kann Komponente (E) auch Stearate beinhalten. Stearate können entweder durch Umsetzung entsprechender Natriumsalze mit Metallsalzlösungen (zum Beispiel CaCl₂, MgCl₂, Aluminiumsalze) oder durch direkte Umsetzung der Fettsäure mit Metallhydroxid hergestellt werden (siehe zum Beispiel Baerlocher Additives, 2005). Bevorzugt wird Aluminiumtristearat verwendet.

Als weitere Zusatzstoffe kommen auch so genannte Nukleierungsmittel, wie beispielsweise Talkum, in Betracht.

Die Reihenfolge, in der die Komponenten (A) bis (E) gemischt werden, ist beliebig.

Die erfindungsgemäßen Formmassen können nach an sich bekannten Verfahren, beispielsweise Extrusion, hergestellt werden. Die erfindungsgemäßen Formmassen können z.B. hergestellt werden, indem man die Ausgangskomponenten in üblichen Mischvorrichtungen wie Schneckenextruder, vorzugsweise Zweischneckenextruder, Brabender-Mischer, Banbury-Mischer oder Kneter mischt und anschließend extrudiert. Nach der Extrusion wird das Extrudat abgekühlt und zerkleinert. Die Reihenfolge der Mischung der Komponenten kann variiert werden. Entsprechend können zwei oder mehr als zwei Komponenten vorgemischt werden, es können aber auch alle Komponenten gemeinsam gemischt werden.

Um eine möglichst homogene Mischung zu erhalten, ist eine intensive Durchmischung vorteilhaft. Dazu sind im Allgemeinen mittlere Mischzeiten von 0,2 bis 30 Minuten bei Temperaturen von 290 bis 380°C, bevorzugt 300 bis 370°C, erforderlich. Nach der Extrusion wird das Extrudat in der Regel abgekühlt und zerkleinert.

Die erfindungsgemäßen thermoplastischen Formmassen können vorteilhaft zur Herstellung von Formteilen, Fasern, Schäumen oder Filmen verwendet werden. Die erfindungsgemäßen Formmassen eignen sich insbesondere zur Herstellung von Formteilen für Haushaltsartikel, elektrische oder elektronische Bauteile sowie zur Herstellung von Formteilen für den Fahrzeugsektor, insbesondere Automobil.

Die folgenden Beispiele erläutern die Erfindung näher, ohne sie einzuschränken.

### Beispiele

Die E-Moduli, die Reißfestigkeit und die Reißdehnung der Proben wurden im Zugversuch nach ISO 527 an Schulterstäben ermittelt.

Die Schlagzähigkeit der Produkte wurde an ISO-Stäben nach ISO 179 1eU bestimmt.

Die Fließfähigkeit wurde anhand der Schmelzeviskosität beurteilt. Die Schmelzestabilität wurde mittels eines Kapillarrheometers bestimmt. Dabei wurde die scheinbare Viskosität bei 350°C als Funktion der Scherrate in einem Kapillarviskosimeter (Göttfert Kapillarviskosimeter Rheograph 2003) mit einer Kreiskapillare der Länge 30 mm, einem Radius von 0,5 mm, einem Einlaufwinkel der Düse von 180°, einem Durchmesser des Reservoirgefäßes der Schmelze von 12 mm und mit einer Vorheizzeit von 5 Minuten bestimmt. Angegeben sind die bei 1000 Hz bestimmten Werte.

Die Beständigkeit gegenüber FAM B wurde bestimmt, indem ISO-Stäbe der Größe 80x40x4 mm sieben Tage bei 60°C in FAM B gelagert wurden. Anschließend wurden die Stäbe zur Ablüftung liegen gelassen, dann 1 Tag bei Vakuum und Raumtemperatur gelagert und anschließend 2 Tage im Vakuum bei 100°C. Anschließend wurde die Schlagzähigkeit gemäß ISO 179 1 eU bestimmt.

Die Viskositätszahl der Polyarylenether wurde in 1 %-iger Lösung von N-Methyl-pyrrolidon bei 25°C gemäß DIN EN ISO 1628-1 bestimmt.

### Komponente A1

Als Komponente A1-1 wurde ein Polyethersulfon des Typs PESU mit einer Viskositätszahl von 49,0 ml/g (Ultrason^{®} E 1010 der BASF SE) verwendet. Das verwendete Produkt wies 0,16 Gew.-% Cl-Endgruppen und 0,21 Gew.-% OCH₃-Endgruppen auf.

### Komponente A2

Als Komponente A2-1 wurde ein Polyethersulfon mit einer Viskositätszahl von 55,6 ml/g verwendet, welches 0,20 Gew.-% OH-Endgruppen und 0,02 Gew.% Cl-Endgruppen aufwies.

### Komponente B

Als Komponente B-1 wurde ein Polyphenylensulfid mit einer Schmelzeviskosität von 145 Pa*s bei 330°C und einer Scherrate von 1000 Hz verwendet.

### Komponente C

Als Komponente C-1 wurde ein funktionalisiertes Polyethersulfon verwendet, welches wie folgt hergestellt wurde:

Unter Stickstoffatmosphäre wurden 577,03 g Dichlordiphenylsulfon, 495,34 g Dihydroxydiphenylsulfon und 5,73 g 4,4'-Bis-hydroxyphenylvaleriansäure ("DPA") in 1053 ml NMP gelöst und mit 297,15 g wasserfreiem Kaliumkarbonat versetzt. Die Reaktionsmischung wurde auf 190°C erhitzt und 6 h bei dieser Temperatur gehalten. Anschließend wurde der Ansatz mit 1947 ml NMP verdünnt. Nach Abkühlen auf T < 80°C wurde die Suspension abgelassen. Durch Filtration wurden dann die unlöslichen Bestandteile abgetrennt. Die erhaltene Lösung wurde dann in Wasser gefällt. Das erhaltene weiße Pulver wurde dann mehrfach mit heißem Wasser extrahiert und anschließend bei 140°C im Vakuum getrocknet. Der Anteil an DPA-Einheiten wurde mittels ¹H-NMR-Spektroskopie mit 1,3,5-Trimethoxybenzol als internem Standard zu 0,9 mol-% bestimmt, die Viskositätszahl des Produkts war 46,9 ml/g.

### Komponente D

Als Komponente D-1 wurden Schnittglasfasern mit einer Stapellänge von 4,5 mm und einem Faserdurchmesser von 10 µm eingesetzt, die mit einer Polyurethanschlichte versehen waren.

**Tabelle 1: Eigenschaften der Blends aus Polyarylenethern und Polyarylensulfiden. Die Zusammensetzung der thermoplastischen Formmassen ist in Gewichtsteilen angegeben.**

| Versuch | V1 | V2 | V3 | V4 | 5 | 6 | V7 | 8 |
|---|---|---|---|---|---|---|---|---|
| Komponente A1-1 | 70 | 41 | 36 | 36 | 34 | 31 | 36 | 28,5 |
| Komponente A2-1 | - | - | - | 5 | 2 | 5 | - | 2,5 |
| Komponente B-1 | - | 14 | 14 | 14 | 14 | 14 | 19 | 19 |
| Komponente C-1 | - | - | 5 | - | 5 | 5 | - | 5 |
| Komponente D-1 | 30 | 45 | 45 | 45 | 45 | 45 | 45 | 45 |
| E-Modul [GPa] | 9,40 | 16,5 | 16,4 | 16,5 | 16,4 | 16,3 | 17,1 | 17,2 |
| Reißdehnung [%] | 2,3 | 1,4 | 1,9 | 1,5 | 1,9 | 1,9 | 1,3 | 1,7 |
| Reißfestigkeit [MPa] | 134 | 148 | 161 | 152 | 166 | 169 | 156 | 175 |
| ISO 179 1eU [kJ/m²] | 47 | 42 | 53 | 44 | 57 | 59 | 37 | 49 |
| Viskosität bei 1000 Hz (350°C) | 684 | 552 | 561 | 562 | 560 | 557 | 479 | 488 |
| Masseverlust in FAM B [%] | 2,1 | 0,9 | 0,7 | 0,8 | 0,3 | 0,2 | 0,7 | 0,1 |

Die erfindungsgemäßen Formmassen zeichnen sich durch eine verbesserte Beständigkeit gegenüber FAM B bei gleichzeitig guten mechanischen Eigenschaften aus. Die erfindungsgemäßen Formmassen weisen insbesondere eine hohe Reißdehnung und eine hohe Schlagzähigkeit sowie eine verbesserte Reißfestigkeit auf.

## Patentansprüche

1. Thermoplastische Formmassen enthaltend folgende Komponenten:
(A) mindestens ein Polyarylenether (A1) mit im Mittel höchstens 0,1 phenolischen Endgruppen pro Polymerkette und mindestens ein Polyarylenether (A2) mit im Mittel mindestens 1,5 phenolischen Endgruppen pro Polymerkette,
(B) mindestens ein Polyarylensulfid,
(C) mindestens ein funktionalisierter Polyarylenether umfassend Carboxylgruppen,
(D) mindestens ein faser- oder teilchenförmiger Füllstoff und
(E) optional weitere Zusatzstoffe und/oder Verarbeitungshilfsmittel.

2. Thermoplastische Formmassen nach Anspruch 1, wobei die Polyarylenether (A1) im Mittel höchstens 0,05 phenolische Endgruppen pro Polymerkette aufweisen.

3. Thermoplastische Formmassen nach Anspruch 1 oder 2, wobei die Polyarylenether (A2) im Mittel mindestens 1,8 phenolische Endgruppen pro Polymerkette aufweisen.

4. Thermoplastische Formmassen nach einem oder mehreren der Ansprüche 1 bis 3, enthaltend von 20 bis 88,5 Gew.-% der Komponente (A1), von 0,5 bis 10 Gew.-% der Komponente (A2), von 5 bis 65 Gew.-% der Komponente (B), von 1 bis 15 Gew.-% der Komponente (C), von 5 bis 70 Gew.-% der Komponente (D) und von 0 bis 40 Gew.-% der Komponente (E), wobei die Summe der Gew.-% der Komponenten (A) bis (E) bezogen auf die Gesamtmenge der Komponenten (A) bis (E) 100 Gew.-% ergibt.

5. Thermoplastische Formmassen nach einem oder mehreren der Ansprüche 1 bis 4, wobei die Polyarylenether der Komponenten (A1) und (A2) unabhängig voneinander aufgebaut sind aus Bausteinen der allgemeinen Formel I: 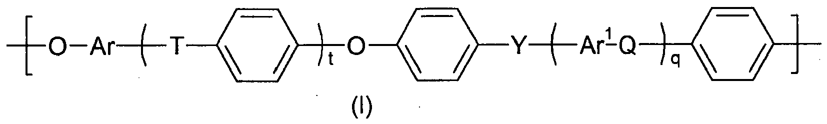 mit folgenden Bedeutungen
t, q: unabhängig voneinander 0, 1, 2 oder 3,
Q, T, Y: unabhängig voneinander jeweils eine chemische Bindung oder Gruppe, ausgewählt aus -O-, -S-, -SO₂-, S=O, C=O, -N=N- und -CR^{a}R^{b}-, wobei R^{a} und R^{b} unabhängig voneinander jeweils für ein Wasserstoffatom oder eine C₁-C₁₂-Alkyl-, C₁-C₁₂-Alkoxy-oder C₆-C₁₈-Arylgruppe stehen, wobei wenigstens eines aus Q, T und Y von -O- verschieden ist, und wenigstens eines aus Q, T und Y für -SO₂- steht und
Ar, Ar¹: unabhängig voneinander C₆-C₁₈-Arylengruppe.

6. Thermoplastische Formmassen nach Anspruch 5, wobei die Polyarylenether (A1) und (A2) aus den gleichen Bausteinen gemäß der allgemeinen Formel I aufgebaut sind.

7. Thermoplastische Formmassen nach Anspruch 5 oder 6, wobei Q, T und Y in Formel (I) unabhängig voneinander ausgewählt sind aus -O- und -SO₂- und wenigstens eines aus Q, T und Y für -SO₂- steht.

8. Thermoplastische Formmassen nach einem oder mehreren der Ansprüche 5 bis 7, wobei Ar und Ar¹ in Formel (I) unabhängig voneinander ausgewählt sind aus der Gruppe bestehend aus 1,4-Phenylen, 1,3-Phenylen, Naphthylen und 4,4'-Bisphenylen.

9. Thermoplastische Formmassen nach einem oder mehreren der Ansprüche 1 bis 8, wobei der funktionalisierte Polyarylenether umfassend Carboxylgruppen Bausteine der allgemeinen Formel I wie in den Ansprüchen 5 bis 8 definiert sowie Bausteine der allgemeinen Formel IV enthält: 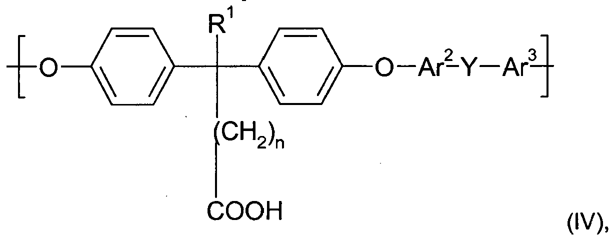 worin
- n für eine ganze Zahl von 0 bis 6, und
- R¹ für H, C₁ bis C₆-Alkyl, oder -(CH₂)ₙ-COOH
- Ar² und Ar³ unabhängig voneinander eine C₆ bis C₁₈-Arylengruppe und
- Y eine chemische Bindung oder Gruppe, ausgewählt aus -O-, -S-, -SO₂-, S=O, C=O, -N=N- und -CR^{a}R^{b}-, wobei R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe
bedeutet.

10. Thermoplastische Formmassen nach Anspruch 9, wobei der Anteil von Bausteinen gemäß der allgemeinen Formel (I) bezogen auf die Summe der Bausteine gemäß Formel (I) und Formel (IV) von 0,5 bis 2 mol-% beträgt, vorzugsweise von 0,7 bis 1,5 mol-%.

11. Thermoplastische Formmassen nach Anspruch 9 oder 10, wobei n = 2 und R¹ = Methyl,.

12. Thermoplastische Formmassen nach einem oder mehreren der Ansprüche 9 bis 11, wobei Ar² = Ar³ = 1,4-Phenylen und Y = -SO₂-.

13. Thermoplastische Formmassen nach einem oder mehreren der Ansprüche 1 bis 12, wobei die Polyarylensulfide der Komponente (B) von 30 bis 100 Gew.-% aus Wiederholungseinheiten gemäß der allgemeinen Formel -Ar-S- aufgebaut sind, wobei -Ar- eine Arylengruppe mit 6 bis 18 Kohlenstoffatomen darstellt.

14. Thermoplastische Formmassen nach einem oder mehreren der Ansprüche 1 bis 13, wobei Komponente (B) Polyphenylensulfid, vorzugsweise Poly(1,4-phenylensulfid) ist.

15. Thermoplastische Formmassen nach einem oder mehreren der Ansprüche 1 bis 14, wobei Komponente (D) aus Glasfasern besteht.

16. Verfahren zur Herstellung von thermoplastischen Formmassen gemäß einem oder mehreren der Ansprüche 1 bis 15 umfassend das Vermischen der Komponenten (A) bis (E) in einer Mischvorrichtung.

17. Verwendung von thermoplastischen Formmassen gemäß einem oder mehreren der Ansprüche 1 bis 15 zu Herstellung von Formteilen, Fasern, Schäumen oder Filmen.

18. Formteile, Fasern, Schäume oder Filme enthaltend thermoplastische Formmassen gemäß einem oder mehreren der Ansprüche 1 bis 15.

## Claims

1. A thermoplastic molding composition comprising the following components:
(A) at least one polyarylene ether (A1) having an average of at most 0.1 phenolic end group per polymer chain and at least one polyarylene ether (A2) having an average of at least 1.5 phenolic end groups per polymer chain,
(B) at least one polyarylene sulfide,
(C) at least one functionalized polyarylene ether comprising carboxy groups,
(D) at least one fibrous or particulate filler, and
(E) optionally further additives and/or processing aids.

2. The thermoplastic molding composition according to claim 1, where the polyarylene ethers (A1) have an average of at most 0.05 phenolic end group per polymer chain.

3. The thermoplastic molding composition according to claim 1 or 2, where the polyarylene ethers (A2) have an average of at least 1.8 phenolic end groups per polymer chain.

4. The thermoplastic molding composition according to one or more of claims 1 to 3, comprising from 20 to 88.5% by weight of component (A1), from 0.5 to 10% by weight of component (A2), from 5 to 65% by weight of component (B), from 1 to 15% by weight of component (C), from 5 to 70% by weight of component (D), and from 0 to 40% by weight of component (E), where the total of the % by weight values for components (A) to (E), based on the total amount of components (A) to (E), is 100% by weight.

5. The thermoplastic molding composition according to one or more of claims 1 to 4, where the polyarylene ethers of components (A1) and (A2) are composed independently of one another of units of the general formula I: 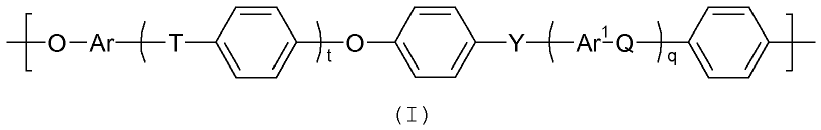 where the definitions are as follows:
t, q: independently of one another 0, 1, 2, or 3,
Q, T, Y: independently of one another in each case a chemical bond or group selected from -0-, -S-, -SO₂-, S=O, C=O, -N=N-, and -CR^{a}R^{b}-, where R^{a} and R^{b} independently of one another are in each case a hydrogen atom or a C₁-C₁₂-alkyl, C₁-C₁₂-alkoxy, or C₆-C₁₈-aryl group, where at least one of Q, T, and Y is not -0-, and at least one of Q, T, and Y is -SO₂-, and
Ar and Ar¹: independently of one another a C₆-C₁₈-arylene group.

6. The thermoplastic molding composition according to claim 5, where the polyarylene ethers (A1) and (A2) are composed of the same units according to the general formula I.

7. The thermoplastic molding composition according to claim 5 or 6, where Q, T, and Y in formula (I) have been selected independently of one another from -0- and -SO₂-, and at least one of Q, T, and Y is -SO₂-.

8. The thermoplastic molding composition according to one or more of claims 5 to 7, where Ar and Ar¹ in formula (I) have been selected independently of one another from the group consisting of 1,4-phenylene, 1,3-phenylene, naphthylene, and 4,4'-bisphenylene.

9. The thermoplastic molding composition according to one or more of claims 1 to 8, where the functionalized polyarylene ether comprising carboxy groups comprises units of the general formula I as defined in claims 5 to 8, and also units of the general formula IV: 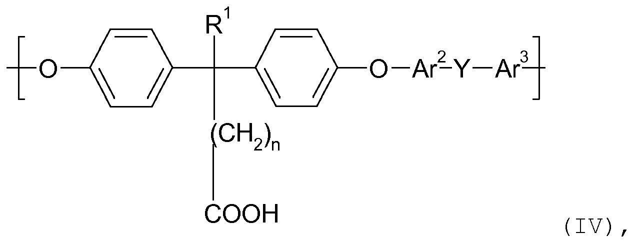 in which
- n is an integer from 0 to 6, and
- R¹ is H, C₁ to C₆-alkyl, or -(CH₂)ₙ-COOH
- Ar² and Ar³ independently of one another are a C₆-C₁₈-arylene group, and
- Y is a chemical bond or a group selected from -0-, -S-, -SO₂-, S=O, C=O, -N=N-, and -CR^{a}R^{b}-, where R^{a} and R^{b} independently of one another are in each case a hydrogen atom or a C₁-C₁₂-alkyl, C₁-C₁₂-alkoxy, or C₆-C₁₈-aryl group.

10. The thermoplastic molding composition according to claim 9, where the proportion of units according to the general formula (I), based on the entirety of the units according to formula (I) and formula (IV), is from 0.5 to 2 mol%, preferably from 0.7 to 1.5 mol%.

11. The thermoplastic molding composition according to claim 9 or 10, where n = 2 and R¹ = methyl.

12. The thermoplastic molding composition according to one or more of claims 9 to 11, where Ar² = Ar³ = 1,4-phenylene, and Y = -SO₂-.

13. The thermoplastic molding composition according to one or more of claims 1 to 12, where the polyarylene sulfides of component (B) are composed of from 30 to 100% by weight of repeat units according to the general formula -Ar-S-, where -Ar- is an arylene group having from 6 to 18 carbon atoms.

14. The thermoplastic molding composition according to one or more of claims 1 to 13, where component (B) is polyphenylene sulfide, preferably poly(1,4-phenylene sulfide).

15. The thermoplastic molding composition according to one or more of claims 1 to 14, where component (D) is composed of glassfibers.

16. A process for producing thermoplastic molding compositions according to one or more of claims 1 to 15 comprising the mixing of components (A) to (E) in a mixing apparatus.

17. The use of thermoplastic molding compositions according to one or more of claims 1 to 15 for producing moldings, fibers, foams, or films.

18. A molding, fiber, foam, or film comprising thermoplastic molding compositions according to one or more of claims 1 to 15.

## Revendications

1. Masses de moulage thermoplastiques, contenant les composants suivantes :
(A) au moins un polyarylène-éther, (A1) présentant en moyenne au plus 0,1 groupe terminal phénolique par chaîne polymère et au moins un polyarylène-éther (A2) présentant en moyenne au moins 1,5 groupe terminal phénolique par chaîne polymère,
(B) au moins un poly(sulfure d'arylène),
(C) au moins un polyarylène-éther fonctionnalisé comprenant des groupes carboxyle,
(D) au moins une charge sous forme de fibres ou de particules et
(E) éventuellement d'autres additifs et/ou adjuvants de transformation.

2. Masses de moulage thermoplastiques selon la revendication 1, les polyarylène-éthers (A1) présentant en moyenne au plus 0,05 groupe terminal phénolique par chaîne polymère.

3. Masses de moulage thermoplastiques selon la revendication 1 ou 2, les polyarylène-éthers (A2) présentant en moyenne au moins 1,8 groupe terminal phénolique par chaîne polymère.

4. Masses de moulage thermoplastiques selon l'une ou plusieurs des revendications 1 à 3, contenant 20 à 88,5% en poids de composant (A1), 0,5 à 10% en poids de composant (A2), 5 à 65% en poids de composant (B), 1 à 15% en poids de composant (C), 5 à 70% en poids de composant (D) et 0 à 40% en poids de composant (E), la somme des % en poids des composants (A) à (E) valant 100% en poids par rapport à la quantité totale des composants (A) à (E).

5. Masses de moulage thermoplastiques selon l'une ou plusieurs des revendications 1 à 4, les polyarylène-éthers des composants (A1) et (A2) étant constitués indépendamment les uns des autres à partir d'éléments de formule générale I : 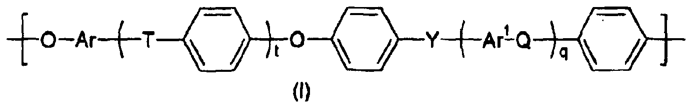 présentant les significations suivantes :
t, q : indépendamment l'un de l'autre, 0, 1, 2 ou 3,
Q, T, Y : indépendamment les uns des autres, à chaque fois une liaison ou un groupe, choisi parmi -O-, -S-, -SO₂-, S=O, C=O, -N=N-, -CR^{a}R^{b}-, R^{a} et R^{b} représentant indépendamment l'un de l'autre à chaque fois un atome d' hydrogène ou un groupe C₁-C₁₂-alkyle, C₁-C₁₂-alcoxy ou C₆-C₁₈-aryle, au moins un parmi Q, T et Y ne représentant pas -O-, et au moins un parmi Q, T et Y représentant -SO₂- et
Ar, Ar¹ : indépendamment l'un de l'autre, un groupe C₆-C₁₈-arylène.

6. Masses de moulage thermoplastiques selon la revendication 5, les polyarylène-éthers (A1) et (A2) étant constitués à partir d'éléments identiques selon la formule générale I.

7. Masses de moulage thermoplastiques selon la revendication 5 ou 6, Q, T et Y dans la formule (I) étant choisis indépendamment les uns des autres parmi -0- et -SO₂- et au moins un parmi Q, T et Y représentant -SO₂-.

8. Masses de moulage thermoplastiques selon l'une ou plusieurs des revendications 5 à 7, Ar et Ar¹ dans la formule (I) étant choisis indépendamment l'un de l'autre dans le groupe constitué par 1,4-phénylène, 1,3-phénylène, naphtylène et 4,4'-bisphénylène.

9. Masses de moulage thermoplastiques selon l'une ou plusieurs des revendications 1 à 8, le polyarylène-éther fonctionnalisé comprenant des groupes carboxyle contenant des éléments de formule générale I comme définis dans les revendications 5 à 8 ainsi que des éléments de formule générale IV : 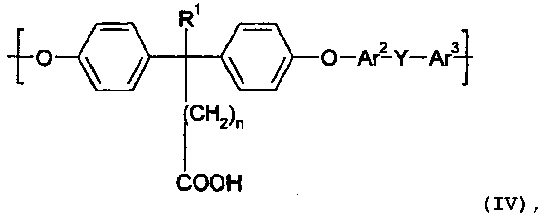 où
- n signifie un nombre entier de 0 à 6,
- R¹ signifie H, C₁ à C₆-alkyle, ou -(CH₂)ₙ-COOH,
- Ar² et Ar³ signifient, indépendamment l'un de l'autre, un groupe C₆ à C₁₈-arylène et
- Y signifie une liaison chimique ou un groupe, choisi parmi -O-, -S-, -SO₂-, S=O, C=O, -N=N- et -CR^{a}R^{b}-, R^{a} et R^{b} représentant, indépendamment l'un de l'autre, à chaque fois un atome d'hydrogène ou un groupe C₁-C₁₂-alkyle, C₁-C₁₂-alcoxy ou C₆-C₁₈-aryle.

10. Masses de moulage thermoplastiques selon la revendication 9, la proportion d'éléments selon la formule générale (I) par rapport à la somme des éléments selon la formule (I) et la formule (IV) valant 0,5 à 2% en mole, de préférence 0,7 à 1.5% en mole.

11. Masses de moulage thermoplastiques selon la revendication 9 ou 10, n = 2 et R¹ = méthyle.

12. Masses de moulage thermoplastiques selon l'une ou plusieurs des revendications 9 à 11, Ar² = Ar³ = 1,4-phénylène et Y = -SO₂-.

13. Masses de moulage thermoplastiques selon l'une ou plusieurs des revendications 1 à 12, les poly(sulfures d'arylène) du composant (B) étant constitués par 30 à 100% en poids d'unités récurrentes selon la formule générale -Ar-S-, -Ar- représentant un groupe arylène comprenant 6 à 18 atomes de carbone.

14. Masses de moulage thermoplastiques selon l'une ou plusieurs des revendications 1 à 13, le composant (B) étant du poly(sulfure de phénylène), de préférence du poly(sulfure de 1,4-phénylène).

15. Masses de moulage thermoplastiques selon l'une ou plusieurs des revendications 1 à 14, le composant (D) étant constitué de fibres de verre.

16. Procédé pour la préparation de masses de moulage thermoplastiques selon l'une ou plusieurs des revendications 1 à 15, comprenant le mélange des composants (A) à (E) dans un dispositif de mélange.

17. Utilisation de masses de moulage thermoplastiques selon l'une ou plusieurs des revendications 1 à 15 pour la production de pièces moulées, de fibres, de mousses ou de films.

18. Pièces moulées, fibres, mousses ou films contenant des masses de moulage thermoplastiques selon l'une ou plusieurs des revendications 1 à 15.
